# EUROPEAN PATENT APPLICATION

(11) **EP 3 396 647 A1**
(43) Date of publication of application: **31.10.2018**
(21) Application number: 17198311.7
(22) Date of filing: 25.10.2017
(51) Int. Cl.: G08G 1/00

(54) **VEHICLE PARKING MANAGEMENT METHOD, VEHICLE, PARKING APPARATUS AND SERVER**

(30) Priority: 28.04.2017 CN 201710294973
(71) Applicant: Beijing Mobike Technology Co., Ltd., 100191 Haidan District, Beijing (CN)
(72) Inventor: XIA, Yiping, Haidian District, Beijing, 100191 (CN); CHEN, Chaochao, Haidian District, Beijing, 100191 (CN); GUO, Zirong, Haidian District, Beijing, 100191 (CN)
(74) Representative: Hübner, Gerd

(57) **Abstract**

Disclosed are a parking management method and system for a public vehicle, a vehicle, a parking apparatus and a server. The parking management method for a public vehicle includes: receiving wireless positioning data sent by a parked vehicle via a parking apparatus provided on the site of a parking area; obtaining the location of the vehicle relative to the parking apparatus according to the wireless positioning data; determining whether the vehicle is parked within the parking area according to the location of the vehicle relative to the parking apparatus; and providing a user with the determination result as a prompt message, the user including a user of the vehicle and/or a parking administrator. The present invention provides a new parking management solution for a public vehicle.

## Description

### FIELD OF THE INVENTION

The present invention relates to the field of vehicle management, and in particular, to a parking management method and system for a public vehicle, a vehicle, a parking apparatus and a server.

### BACKGROUND OF THE INVENTION

Sharing economy has become the development trend of the era. Various public vehicles appear in people's daily life, such as public bicycles supported by the government as well as public bicycles tricycles, electric vehicles, automobiles and so on operated by enterprises.

In terms of the management of public vehicles, parking management is always a difficult problem. In the prior art, the parking of public vehicles is usually managed by means of parking piles and thus the costs are high.

### SUMMARY OF THE INVENTION

An object of the present invention is to provide a new parking management solution for a public vehicle.

According to a first embodiment of the present invention, a parking management method for a public vehicle is provided, comprising: receiving wireless positioning data sent by a parked vehicle via a parking apparatus provided on the site of a parking area; obtaining the location of the vehicle relative to the parking apparatus according to the wireless positioning data; determining whether the vehicle is parked within the parking area according to the location of the vehicle relative to the parking apparatus; and providing a user with the determination result as a prompt message, the user including a user of the vehicle and/or a parking administrator.

Alternatively, the prompt message is provided when the vehicle is not parked within the parking area.

Alternatively, the parking area is provided with at least three parking apparatuses and the three parking apparatuses are not collinear.

Alternatively, the parking apparatus obtains the location of the vehicle relative to the parking apparatus according to the wireless positioning data; or the parking apparatus uploads the wireless positioning data to a server, and the server obtains the location of the vehicle relative to the parking apparatus according to the wireless positioning data.

Alternatively, the parking apparatus provides the user with the prompt message, or a terminal of the user provides the user with the prompt message, or the vehicle provides the user with the prompt message.

Alternatively, the parking apparatus or the terminal of the user receives the prompt message from the server, or the vehicle receives the prompt message from the parking apparatus or the server.

Alternatively, the parking apparatus sends the wireless positioning data to the server; if the server receives a parking notification of the vehicle but does not receive the wireless positioning data of the vehicle from the parking apparatus, then the server sends the prompt message to the terminal of the user.

Alternatively, the parking notification is sent to the server by a/the terminal of the vehicle's user, or the parking notification is sent to the server by the vehicle when the vehicle is set to a parked state.

According to a second embodiment of the present invention, a vehicle is provided, comprising a parking state monitoring unit and a first wireless communication unit, wherein the parking state monitoring unit is configured to monitor whether the vehicle is set to a parked state; and the first wireless communication unit is configured to emit wireless positioning data to the surrounding to locate the vehicle when the vehicle is set to a parked state.

Alternatively, the vehicle further comprises a second wireless communication unit, wherein the second wireless communication unit is configured to send a parking notification to a server when the vehicle is set to a parked state.

Alternatively, the vehicle further comprises a first parking prompt unit, wherein the first wireless communication unit is further configured to receive a prompt message about vehicle parking from a parking apparatus, or the second wireless communication unit is further configured to receive the prompt message about vehicle parking from the server; and the first parking prompt unit is configured to provide a user with a tip about vehicle parking according to the prompt message, the user including a user of the vehicle and/or a parking administrator.

Alternatively, the vehicle is set to a parked state when a lock of the vehicle is set to a locked state.

According to a third embodiment of the present invention, a parking apparatus is provided, comprising a third wireless communication unit and a fourth communication unit, wherein the third wireless communication unit is configured to receive wireless positioning data sent by a parked vehicle; and the fourth communication unit is configured to send the wireless positioning data to a server.

According to a fourth embodiment of the present invention, a parking apparatus is provided, comprising a third wireless communication unit, a positioning unit and a second parking prompt unit, wherein the third wireless communication unit is configured to receive wireless positioning data sent by a parked vehicle; the positioning unit is configured to obtain the location of the vehicle relative to the parking apparatus according to the wireless positioning data; and the second parking prompt unit is configured to determine whether the vehicle is parked within a parking area according to the location of the vehicle relative to the parking apparatus, and if the vehicle is not parked within the parking area, then prompt a user that the vehicle is not parked within the parking area or send the vehicle a prompt message that the vehicle is not parked within the parking area through the third wireless communication unit, the user including a user of the vehicle and/or a parking administrator.

According to an fifth embodiment of the present invention, a server is provided, comprising a memory and a processor, wherein the memory stores instructions to control the processor to operate to implement the parking management method mentioned above.

In the parking management method for a public vehicle provided according to the present invention, a parking apparatus provided on the site of a parking area receives wireless positioning data sent by a parked vehicle, obtains the location of the vehicle relative to the parking apparatus according to the wireless positioning data to determine whether the vehicle is parked within the parking area, and prompts the user to park according to the determination result to guide the user to park the vehicle in the parking area correctly.

In order to make the above objects, features and advantages of the present invention more clear and easy to understand, preferred embodiments will be set forth to make detailed description with reference to the accompanying drawings.

### BRIEF DESCRIPTION OF THE DRAWINGS

In order to illustrate the technical solution of the embodiments of the present invention more clearly, the accompanying drawings to be used in the embodiments will be described simply hereinafter. It should be understood that the following accompanying drawings merely illustrate some embodiments of the present invention and thus shall not be regarded as a limitation of the scope. For those skilled in the art, other relevant drawings may be obtained according to these accompanying drawings without any inventive efforts.
Fig. 1 is a flowchart of a parking management method for a public vehicle provided according to an embodiment of the present invention.
Fig. 2 is a block diagram of a vehicle provided according to an embodiment of the present invention.
Fig. 3 is a block diagram of a vehicle provided according to another embodiment of the present invention.
Fig. 4 is a block diagram of a vehicle provided according to yet another embodiment of the present invention.
Fig. 5 is a block diagram of a parking apparatus provided according to an embodiment of the present invention.
Fig. 6 is a block diagram of a parking apparatus provided according to another embodiment of the present invention.
Fig. 7 is a block diagram of a parking apparatus provided according to yet another embodiment of the present invention.
Fig. 8 is a block diagram of a server provided according to an embodiment of the present invention.
Fig. 9 is a block diagram of a server provided according to another embodiment of the present invention.
Fig. 10 is a block diagram of a server provided according to yet another embodiment of the present invention.
Fig. 11 is a block diagram of a parking management system provided according to an embodiment of the present invention.
Fig. 12 is a block diagram of the hardware configuration of a parking apparatus provided according to an embodiment of the present invention.
Fig. 13 is a schematic diagram of the overall architecture of a public vehicle system according to an embodiment of the present invention.

### DETAILED DESCRIPTION OF THE EMBODIMENTS

Various exemplary embodiments of the present invention will be described in detail with reference to the accompanying drawings. It should be noted that unless stated specifically otherwise, the relative arrangement of the components and steps illustrated in these embodiments, the numeral expressions and the values do not limit the scope of the present invention.

The description of at least one exemplary embodiment of the present invention is actually merely illustrative rather than limiting the present invention and the application or use thereof.

Technologies, methods and devices known to those skilled in the art may not be described in detail but these technologies, method and device shall be regarded as a part of the description when appropriate.

Any particular value in all examples illustrated and described here shall be construed as merely illustrative rather than limiting. Thus, other examples of the exemplary embodiments may have different values.

It should be noted that similar signs and letters represent similar items in the following figures, and thus, once a certain item is defined in a figure, there is no need to further describe the same in the following figures.

### <Overall architecture of public vehicle system>

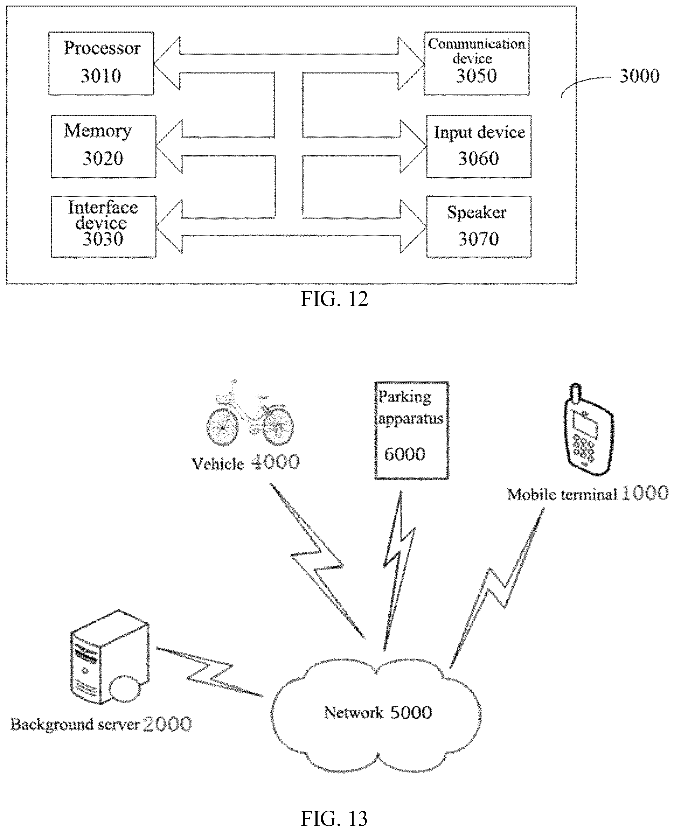

The public vehicle mentioned in the present invention may be for example a shared bicycle. Fig. 13 is a schematic diagram of the overall architecture of a public vehicle system according to an embodiment of the present invention.

As shown in Fig. 13, the public vehicle system may include a mobile terminal 1000, a background server 2000, a vehicle 4000 and a parking apparatus 6000, which can establish communication connections with one another through a wireless network 5000.

The vehicle 4000 is provided with a two-dimensional code and/or code for uniquely identifying a corresponding vehicle. The vehicle 4000 may communicate with the mobile terminal 1000 close to the vehicle by means of wireless communication such as Bluetooth or WIFI.

The vehicle performs wireless communication with the mobile terminal 1000.

A user may scan the two-dimensional code on the vehicle 4000 by means of the mobile terminal 1000 and then send the two-dimensional code information to the background server 2000 to perform an unlocking operation.

The user may also input or identify the coding on the vehicle 4000 by means of the mobile terminal 1000 and then send the coding information to the background server 2000 to perform an unlocking operation.

When the user scans the two-dimensional code or input the code by means of the mobile terminal 2000, he/she needs to use the function of the mobile terminal 1000, such as the flashlight function, camera function and so on of the mobile terminal 1000.

The parking apparatus 6000 is located on the site of a parking area for receiving wireless positioning data sent by the parked vehicle 4000 and uploading the wireless positioning data to the background server 2000 through the network 5000. The parking apparatus 6000 may communicate with the vehicle 4000 or the mobile terminal 1000 close to the parking area by means of wireless communication such as Bluetooth or WIFI.

In the present invention, the mobile terminal 1000 may send or receive a signal by means of a wired or wireless network or may process or store the signal in a memory as a physical storage state. Each mobile terminal may be an electronic device including hardware, software or embedded logic component or two or more such components and being capable of performing a suitable function implemented or supported by the mobile terminal. For example, the mobile terminal may be a smart phone, a tablet computer, a portable email device, an e-book, a handheld game player and/or a game controller, a laptop computer, a netbook computer, a handheld electronic device, a smart wearable device and so on. The present invention covers any suitable mobile terminal. The mobile terminal may enable a user who uses this mobile terminal to access a network.

The mobile terminal 1000 may include a processing device including an application processing portion and an RF/digital signal processor and may also include an ROM, an RAM, a flash memory or any combination thereof.

In addition, the mobile terminal 1000 may be installed with various client applications which can allow the mobile terminal 1000 to transfer a command suitable to operate with other devices. Such an application may be downloaded from a server and installed in the memory of the mobile terminal 1000 and may also be pre-installed on the mobile terminal 1000. In an embodiment of the present invention, the mobile terminal 1000 is installed with a vehicle user terminal application which can help the user to realize the functions of the vehicle 4000.

In an embodiment of the present invention, the background server 2000 is a server. The server mentioned herein shall be understood as a service point which provides a processing, database and communication facility. For example, the server may refer to a single physical processor provided with a relevant communication and data storage and database facility or may refer to a collection of networked or clustered processors, relevant networks and storage devices and operate the application software of the service provided by software and one or more data system and support servers. The server may differ a lot in terms of configuration or performance, but the server generally includes one or more central processing units and memories. The server may also include one or more large-capacity storage devices, one or more power sources, one or more wired or wireless network interfaces, one or more input/output interfaces or one or more operating systems, such as Windows Server, Mac OS X, Unix, Linux, FreeBSD and so on. In particular, the background server 2000 may be an integral server or may be a distributed server across a plurality of computers or computer data centers. There may be various kinds of servers, such as but not limited to network server, news server, mail server, message server, advertisement server, file server, application server, interaction server, database server or proxy server. In some embodiments, each server may include hardware, software, or an embedded logic component for performing a suitable function supported or implemented by the server or a combination of two or more such components. In an embodiment of the present invention, the background server 2000 is used to provide all functions required for the user of the vehicle.

In an embodiment of the present invention, the vehicle 4000 may be a bicycle and may also be a tricycle, an electric moped, a motorcycle and a quadricycle and so on.

In an embodiment of the present invention, the wireless network 5000 covers any suitable wireless network, such as but not limited to 4G network, 3G network, GPRS, Wi-Fi and so on. In addition, the wireless network which couples the background server 2000 and the mobile terminal 1000 together and the wireless network which couples the background server 2000 and the vehicle 4000 together may be the same wireless network and may also be different wireless networks.

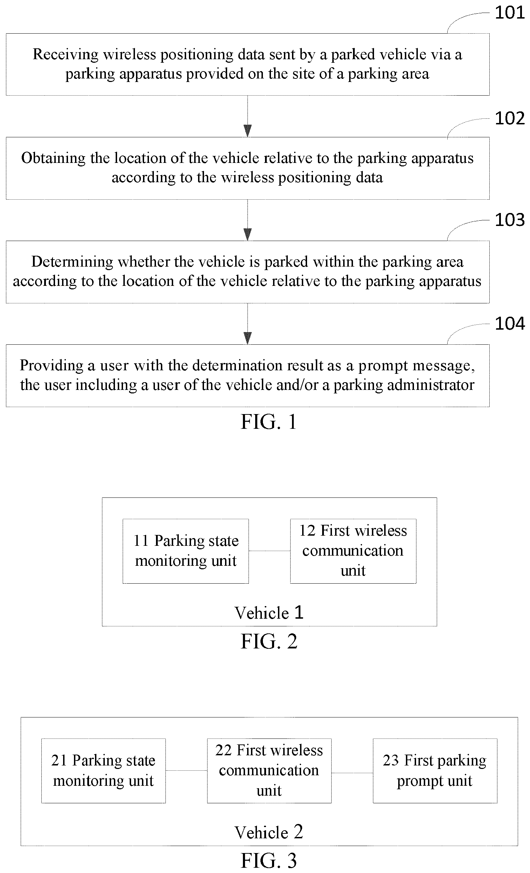

Fig. 1 is a flowchart of a parking management method for a public vehicle provided according to an embodiment of the present invention. The method includes the following steps.

In step 101, a parking apparatus provided on the site of a parking area receives wireless positioning data sent by a parked vehicle.

One or more parking apparatuses may be provided for one parking area, and each parking apparatus can cover the parking area wirelessly. Or, a plurality of parking apparatuses may be provided for one parking area, and all parking apparatuses in combination can cover the parking area wirelessly. In an embodiment, at least three parking apparatuses which are not collinear may be provided for one parking area, and each parking apparatus may cover the parking area singly.

In an embodiment of the present invention, the vehicle per se has a wireless communication function. For example, the vehicle is provided with a Bluetooth communication unit and a WIFI communication unit. The vehicle is provided with a parking state monitoring unit. When the parking state monitoring unit monitors that the vehicle is set to be a parked state, the vehicle will emit wireless positioning data to the surrounding. For example, the vehicle may emit wireless positioning data to the surrounding by means of broadcast. When a lock of the vehicle is set to a locked state, the vehicle is set to a parked state. For example, the vehicle employs an electronic lock. A state pin of the electronic lock is connected to the parking state monitoring unit. When the electronic lock is locked, the output of the state pin will change, and the parking state monitoring unit may monitor that the vehicle is set to a locked state.

The parking apparatus also has a wireless communication function. For example, the parking apparatus is provided with a Bluetooth communication unit and a WIFI communication unit. The parking apparatus may receive the wireless positioning data sent by the vehicle by means of wireless scanning.

In an embodiment of the present invention, the wireless positioning data may refer to a wireless signal which can locate the vehicle. Those skilled in the art may establish a wireless communication link between the vehicle and the parking apparatus in many ways, which all belong to the protection scope of the present invention and will not be described here anymore. Those skilled in the art may monitor whether the lock of the vehicle is set to a locked state in many ways, which all belong to the protection scope of the present invention and will not be described here anymore.

In step 102, the location of the vehicle relative to the parking apparatus is obtained according to the wireless positioning data.

After receiving the wireless positioning data, the parking apparatus may use the wireless positioning data to locate the vehicle to obtain the location of the vehicle relative to the parking apparatus. Or, after receiving the wireless positioning data, the parking apparatus may send the wireless positioning data to a server, and the server uses the wireless positioning data to locate the vehicle to obtain the location of the vehicle relative to the parking apparatus. The server may also issue the locating result to the parking apparatus.

In an embodiment of the present invention, in step 102, the distance between the vehicle and the parking apparatus may be calculated first according to the received wireless positioning data. For example, the distance between the vehicle and the parking apparatus may be calculated using Received Signal Strength Indicator (RSSI), Time of Advent (TOA), Time Difference of Arrival (TDOA) and receive signal Angle of Arrival (AOA) in the prior art. Then, the location of the vehicle relative to the parking apparatus is obtained according to the distance between the vehicle and the parking apparatus. For example, if one parking apparatus is provided in the parking area and the distance between the vehicle and the parking apparatus is X meters, then the vehicle is located away from the parking apparatus by X meters. If three or more parking apparatuses are provided in the parking area and these parking apparatuses are not collinear, then the unique particular location of the vehicle may be calculated according to the distances between the vehicle and these parking apparatuses using the three-point location theory.

In step 103, whether the vehicle is parked within the parking area is obtained according to the location of the vehicle relative to the parking apparatus.

In an embodiment of the present invention, the parking apparatus obtains the location of the vehicle relative to the parking apparatus and determines whether the vehicle is parked within the parking area according to the location of the vehicle relative to the parking apparatus. Or, the server obtains the location of the vehicle relative to the parking apparatus and determines whether the vehicle is parked within the parking area according to the location of the vehicle relative to the parking apparatus. The server may issue the determination result to the parking apparatus.

Since the parking apparatus is preset for the parking area and the location of the parking apparatus relative to the parking area is determined, in step 103, whether the vehicle is parked within the parking area can be determined using the location of the vehicle relative to the parking apparatus. For example, the parking area is a circle with a radius of Y meters and one parking apparatus is provided at the center of the parking area, then when the vehicle is located within Y meters away from the parking apparatus, it is determined that the vehicle is parked within the parking area, and otherwise, it is determined that the vehicle is parked outside the parking area.

In step 104, the determination result as a prompt message is provided for a user, the user including a user of the vehicle and/or a parking administrator.

In an embodiment, the parking apparatus provides a user the determination result as a prompt message. For example, the determination result is that the vehicle is not parked within the parking area, then the parking apparatus emits a voice prompt "The vehicle is not parked within the parking area; please park the vehicle in the parking area" to guide the user of the vehicle and/or the parking administrator to park the vehicle correctly.

In an embodiment, the parking apparatus provides prompt message about vehicle parking to the vehicle based on the determination result. If the determination result is that the vehicle is parked within the parking area, then the prompt message may be for example "The vehicle is parked correctly". If the determination result is that the vehicle is not parked within the parking area, then the prompt message may be for example "The vehicle is not parked within the parking area". The prompt message may be sent to the vehicle only when the vehicle is not parked within the parking area. The vehicle prompts the user based on the prompt message. For example, when the prompt message indicates that the vehicle is not parked within the parking area, then the vehicle emits a sound to prompt the user or the vehicle prompts the user by means of flicking to guide the user to park the vehicle correctly.

In an embodiment, the server sends prompt message about vehicle parking to a terminal of the user based on the determination result. The terminal may be a smart electronic device, such as a mobile phone. The terminal of the user prompts the user of the parking condition of the vehicle to guide the user to park the vehicle correctly. The prompt message about vehicle parking may be for example "The vehicle is parked correctly; thanks", or "The vehicle is not parked within the parking area; please park the vehicle in the parking area".

In an embodiment, the server provides prompt message about vehicle parking to the vehicle based on the determination result. If the determination result is that the vehicle is parked within the parking area, then the prompt message may be for example "The vehicle is parked correctly". If the determination result is that the vehicle is not parked within the parking area, then the prompt message may be for example "The vehicle is not parked within the parking area". The prompt message may be sent to the vehicle only when the vehicle is not parked within the parking area. The vehicle prompts the user based on the prompt message. For example, when the prompt message indicates that the vehicle is not parked within the parking area, then the vehicle emits a sound to prompt the user or the vehicle prompts the user by means of flicking to guide the user to park the vehicle correctly.

In an embodiment, after receiving the wireless positioning data, the parking apparatus sends the wireless positioning data to the server. After the vehicle is parked, the user of the vehicle may send a parking notification to the server by means of the terminal thereof. Or, the parking state monitoring unit of the vehicle sends a parking notification to the server when monitoring that the vehicle is set to a parked state. If the server receives the parking notification of the vehicle but does not receive the wireless positioning data of the vehicle from the parking apparatus, then the server sends prompt message about vehicle parking to the terminal of the user to guide the user to park the vehicle correctly.

In an embodiment of the present invention, there may be various methods to prompt the user, such as sound prompt, or light prompt, or terminal vibration prompt, which all belong to the protection scope of the present invention and will not be described here anymore.

In the parking management method for a public vehicle provided according to an embodiment of the present invention, a parking apparatus provided on the site of a parking area receives wireless positioning data sent by a parked vehicle, obtains the location of the vehicle relative to the parking apparatus according to the wireless positioning data to determine whether the vehicle is parked within the parking area, and prompts the user to park according to the determination result to guide the user to park the vehicle in the parking area correctly.

In the parking management method for a public vehicle provided according to an embodiment of the present invention, the location of the vehicle relative to the parking apparatus is obtained using the communication between the vehicle and the parking apparatus provided on the site of the parking area to determine whether the vehicle is parked within the parking area. Compared to determining whether the vehicle is parked within the parking area by locating the vehicle by means of GPS, there will be rare locating delay and rare locating failure due to signal shielding. Thus, the parking management method for a public vehicle provided according to an embodiment of the present invention is more effective.

A server is provided according to an embodiment of the present invention. The server includes a memory and a processor. The memory is used to store instructions to control the processor to operate to implement the parking management method for a public vehicle above.

For those skilled in the art, the parking management method for a public vehicle above and the functions of the vehicle, the terminal, the server and the parking apparatus involved in the parking management method for a public vehicle above may be realized by means of hardware, software or a combination thereof.

Based on the same invention concept, Fig. 2 shows a vehicle provided according to an embodiment of the present invention. The vehicle 1 includes a parking state monitoring unit 11 and a first wireless communication unit 12.

The parking state monitoring unit 11 is configured to monitor whether the vehicle is set to a parked state.

The first wireless communication unit 12 is configured to emit wireless positioning data to the surrounding to locate the vehicle when the vehicle is set to a parked state. The first wireless communication unit 12 is for example a Bluetooth communication unit or a WIFI communication unit.

Based on the same invention concept, Fig. 3 shows a vehicle provided according to an embodiment of the present invention. The vehicle 2 includes a parking state monitoring unit 21, a first wireless communication unit 22 and a first parking prompt unit 23.

The parking state monitoring unit 21 is configured to monitor whether the vehicle is set to a parked state.

The first wireless communication unit 22 is configured to emit wireless positioning data to the surrounding to locate the vehicle when the vehicle is set to a parked state.

The first wireless communication unit 22 is further configured to receive prompt message about vehicle parking from a parking apparatus. The first wireless communication unit 22 is for example a Bluetooth communication unit or a WIFI communication unit.

The first parking prompt unit 23 is configured to provide a user with a tip about vehicle parking according to the prompt message, the user including a user of the vehicle and/or a parking administrator.

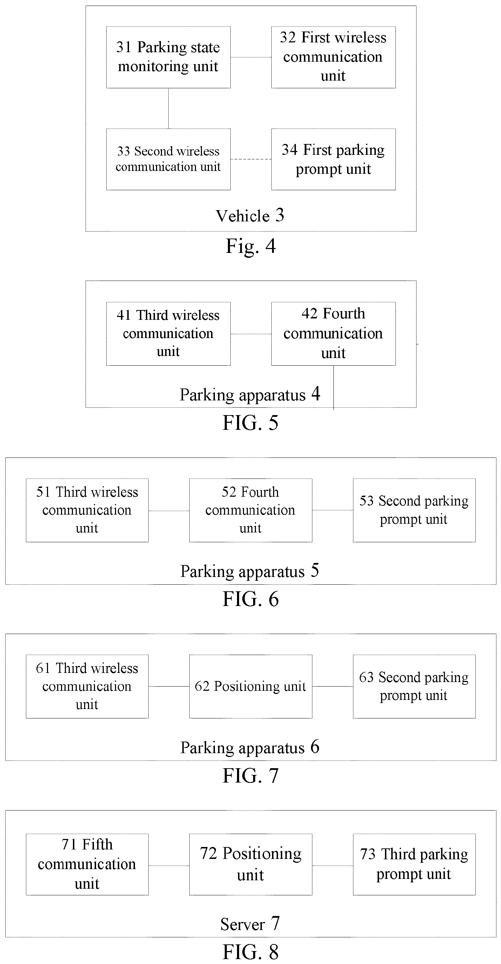

Based on the same invention concept, Fig. 4 shows a vehicle provided according to an embodiment of the present invention. The vehicle 3 includes a parking state monitoring unit 31, a first wireless communication unit 32, a second wireless communication unit 33 and a first parking prompt unit 34.

The parking state monitoring unit 31 is configured to monitor whether the vehicle is set to a parked state.

The wireless communication unit 32 is configured to emit wireless positioning data to the surrounding to locate the vehicle when the vehicle is set to a parked state. The first wireless communication unit 22 is for example a Bluetooth communication unit or a WIFI communication unit.

The second wireless communication unit 33 is configured to send a parking notification to a server when the vehicle is set to a parked state. The second wireless communication unit 33 is further configured to receive prompt message about vehicle parking from the server. The second wireless communication unit 33 may be for example a 2G/3G/4G wireless communication unit.

The first parking prompt unit 34 is configured to provide a user with a tip about vehicle parking according to the prompt message, the user including a user of the vehicle and/or a parking administrator.

In the above embodiments of the vehicle, the first parking prompt unit may be a sound prompt unit. When a lock of the vehicle is set to a locked state, the vehicle is set to a parked state.

Based on the same invention concept, Fig. 5 shows a parking apparatus provided according to an embodiment of the present invention. The parking apparatus 4 includes a third wireless communication unit 41 and a fourth communication unit 42.

The third wireless communication unit 41 is configured to receive wireless positioning data sent by a parked vehicle. The third wireless communication unit 41 is for example a Bluetooth communication unit or a WIFI communication unit.

The fourth communication unit 42 is configured to send the wireless positioning data to a server.

Based on the same invention concept, Fig. 6 shows a parking apparatus provided according to an embodiment of the present invention. The parking apparatus 5 includes a third wireless communication unit 51, a fourth communication unit 52 and a second parking prompt unit 53.

The third wireless communication unit 51 is configured to receive wireless positioning data sent by a parked vehicle. The third wireless communication unit 51 is for example a Bluetooth communication unit or a WIFI communication unit.

The fourth communication unit 52 is configured to send the wireless positioning data to a server and receive prompt message about vehicle parking from the server.

The second parking prompt unit 53 is configured to provide a user with a tip about vehicle parking according to the prompt message, the user including a user of the vehicle and/or a parking administrator.

The third wireless communication unit 51 is further configured to send the prompt message about vehicle parking to the vehicle.

Based on the same invention concept, Fig. 7 shows a parking apparatus provided according to an embodiment of the present invention. The parking apparatus 6 includes a third wireless communication unit 61, a positioning unit 62 and a second parking prompt unit 63.

The third wireless communication unit 61 is configured to receive wireless positioning data sent by a parked vehicle. The third wireless communication unit 61 is for example a Bluetooth communication unit or a WIFI communication unit.

The positioning unit 62 is configured to obtain the location of the vehicle relative to the parking apparatus according to the wireless positioning data.

The second parking prompt unit 63 is configured to determine whether the vehicle is parked in a parking area according to the location of the vehicle relative to the parking apparatus, if the vehicle is not parked within the parking area, then prompt to a user that the vehicle is not parked within the parking area or send to the vehicle prompt message that the vehicle is not parked within the parking area through the third wireless communication unit 61, the user including a user of the vehicle and/or a parking administrator.

In the above embodiment of the parking apparatus, the third wireless communication unit is a Bluetooth communication unit or a WIFI communication unit.

Based on the same invention concept, Fig. 8 shows a server provided according to an embodiment of the present invention. The server 7 includes a fifth communication unit 71, a positioning unit 72 and a third parking prompt unit 73.

The fifth communication unit 71 is configured to receive wireless positioning data of a parked vehicle from a parking apparatus.

The positioning unit 72 is configured to obtain the location of the vehicle relative to the parking apparatus according to the wireless positioning data.

The third parking prompt unit 73 is configured to determine whether the vehicle is parked within the parking area according to the location of the vehicle relative to the parking apparatus, generate prompt message about vehicle parking based on the determination result, and send the prompt message to the parking apparatus through the fifth communication unit 71.

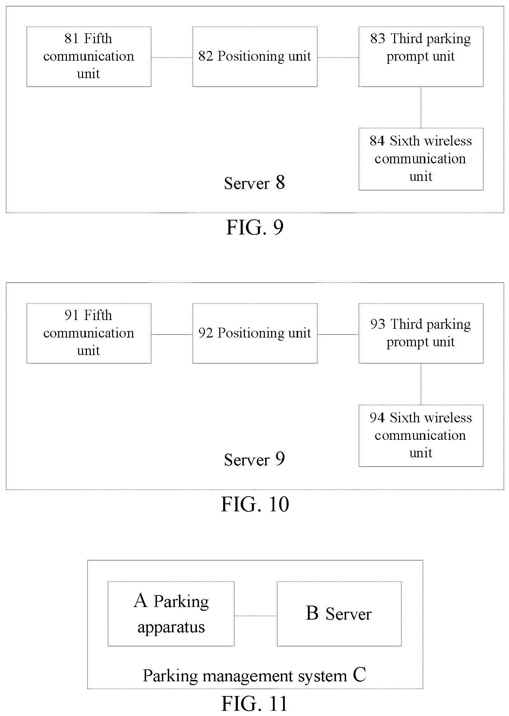

Based on the same invention concept, Fig. 9 shows a server provided according to an embodiment of the present invention. The server 8 includes a fifth communication unit 81, a positioning unit 82, a third parking prompt unit 83 and a sixth wireless communication unit 84.

The fifth communication unit 81 is configured to receive wireless positioning data of a parked vehicle from a parking apparatus.

The positioning unit 82 is configured to obtain the location of the vehicle relative to the parking apparatus according to the wireless positioning data.

The third parking prompt unit 83 is configured to determine whether the vehicle is parked in a parking area according to the location of the vehicle relative to the parking apparatus, generate prompt message about vehicle parking based on the determination result, and send the prompt message to the parking apparatus through the fifth communication unit 81.

The sixth wireless communication unit 84 is configured to receive a parking notification of the vehicle.

The third parking prompt unit 83 is configured to, if the server receives the parking notification of the vehicle but does not receive the wireless positioning data of the vehicle from the parking apparatus, then send prompt message about vehicle parking to a terminal of a user through the sixth wireless communication unit 84, the user including a user of the vehicle and/or a parking administrator.

The parking notification of the vehicle is sent by a terminal of the vehicle's user to the server, or the parking notification is sent to the server when the vehicle is set to a parked state.

Based on the same invention concept, Fig. 10 shows a server provided according to an embodiment of the present invention. The server 9 includes a fifth communication unit 91, a positioning unit 92, a third parking prompt unit 93 and a sixth wireless communication unit 94.

The fifth communication unit 91 is configured to receive wireless positioning data of a parked vehicle from a parking apparatus.

The positioning unit 92 is configured to obtain the location of the vehicle relative to the parking apparatus according to the wireless positioning data.

The third parking prompt unit 93 is configured to determine whether the vehicle is parked within the parking area according to the location of the vehicle relative to the parking apparatus, generate prompt message about vehicle parking based on the determination result, and send the prompt message to a terminal of a user through the sixth wireless communication unit 94, the user including a user of the vehicle and/or a parking administrator.

The sixth wireless communication unit 94 is further configured to receive a parking notification of the vehicle.

The third parking prompt unit 93 is further configured to, if the server receives the parking notification of the vehicle but does not receive the wireless positioning data of the vehicle from the parking apparatus, then send prompt message about vehicle parking to a terminal of a user through the sixth wireless communication unit 94.

The parking notification of the vehicle is sent by terminal of the vehicle's user to the server, or the parking notification is sent to the server when the vehicle is set to a parked state.

Based on the same invention concept, Fig. 11 shows a parking management system for a public vehicle provided according to an embodiment of the present invention. The parking management system C includes a server B and a parking apparatus A provided on the site of a parking area.

The parking apparatus A is configured to receive wireless positioning data sent by a parked vehicle and send the wireless positioning data to the server.

The server B is configured to obtain the location of the vehicle relative to the parking apparatus according to the wireless positioning data, determine whether the vehicle is parked in a parking area according to the location of the vehicle relative to the parking apparatus, and send prompt message about vehicle parking to a terminal of a user based on the determination result, the user including a user of the vehicle and/or a parking administrator.

In an embodiment, the server B is further configured to receive a parking notification of the vehicle. If the server B receives the parking notification of the vehicle but does not receive the wireless positioning data of the vehicle from the parking apparatus A, then the server sends prompt message about vehicle parking to the terminal of the user.

Based on the same invention concept, a parking management system for a public vehicle provided according to an embodiment of the present invention will be introduced. The parking management system includes a server and a parking apparatus provided on the site of a parking area. The server may be any one of the above servers, and the parking apparatus may be any one of the above parking apparatuses.

Fig. 12 is a block diagram of the hardware configuration of a parking apparatus which can realize an embodiment of the present invention. The parking apparatus 3000 includes a processor 3010, a memory 3020, an interface device 3030, a communication device 3050, an input device 3060, a speaker 3070 and so on.

The memory 3020 is used to store instructions to control the processor 3010 to operate to perform the parking management steps implemented by the above parking apparatus.

The processor 3010 may be for example a central processing unit (CPU), a microprocessor (MPU) and so on. The memory 3020 may include ROM (read-only memory), RAM (random access memory), non-volatile memory such as hard disk and so on. The interface device 3030 includes for example a USB interface and so on. An administrator may maintain the parking apparatus 3000 by means of the interface device 303, such as performing software upgrading on the parking apparatus 3000. The communication device 3050 includes a wireless communication unit and can perform wireless communication with the vehicle. Furthermore, the communication device 3050 may also include other wired or wireless communication units to communicate with the server. The input device 3060 may include for example a touch screen, a keyboard, a voice input device and so on. The parking apparatus may output voice information through the speaker 3070 to prompt a user of the parking condition of the vehicle.

The parking apparatus shown in Fig. 12 is merely illustrative rather than intended to limit the present invention and the application and use thereof. Those skilled in the art shall understand that although Fig. 12 shows a plurality of apparatuses, the present invention may merely involve some of the apparatuses. Those skilled in the art may design instructions according to the disclosed solution of the present invention, and how to instruct the processor to operate is well-known in the art, which will not be described here anymore.

In the parking management system for a public vehicle provided according to an embodiment of the present invention, a parking apparatus provided on the site of a parking area receives wireless positioning data sent by a parked vehicle, obtains the location of the vehicle relative to the parking apparatus according to the wireless positioning data to determine whether the vehicle is parked in a parking area, and prompts a user to park according to the determination result to guide the user to park the vehicle in the parking area correctly.

In the parking management system for a public vehicle provided according to an embodiment of the present invention, the location of a vehicle relative to a parking apparatus is determined using the communication between the vehicle and the parking apparatus provided on the site of a parking area to determine whether the vehicle is parked within the parking area. Compared to determining whether a vehicle is parked in a parking area by locating the vehicle by means of GPS, there will be rare locating delay and rare locating failure due to signal shielding. Thus, the parking management method for a public vehicle provided according to an embodiment of the present invention is more effective.

In the present embodiment, the technical solutions for vehicle control are provided in the following aspects.

According to the first aspect, there is provided a parking management method for a public vehicle, comprising: receiving wireless positioning data sent by a parked vehicle via a parking apparatus provided on the site of a parking area; obtaining the location of the vehicle relative to the parking apparatus according to the wireless positioning data; determining whether the vehicle is parked within the parking area according to the location of the vehicle relative to the parking apparatus; and providing a user with the determination result as a prompt message, the user including a user of the vehicle and/or a parking administrator.

According to the second aspect, there is provided the method according to the first aspect, wherein the prompt message is provided when the vehicle is not parked within the parking area.

According to the third aspect, there is provided the method according to the first aspect or the second aspect, wherein the parking area is provided with at least three parking apparatuses and the three parking apparatuses are not collinear.

According to the fourth aspect, there is provided the method according to any one of the first aspect to the third aspect, wherein the parking apparatus obtains the location of the vehicle relative to the parking apparatus according to the wireless positioning data; or the parking apparatus uploads the wireless positioning data to a server, and the server obtains the location of the vehicle relative to the parking apparatus according to the wireless positioning data.

According to the fifth aspect, there is provided the method according to any one of the first aspect to the fourth aspect, wherein the parking apparatus provides the user with the prompt message, or a terminal of the user provides the user with the prompt message, or the vehicle provides the user with the prompt message.

According to the sixth aspect, there is provided the method according to the fifth aspect, wherein the parking apparatus or the terminal of the user receives the prompt message from the server, or the vehicle receives the prompt message from the parking apparatus or the server.

According to the seventh aspect, there is provided the method according to any one of the first aspect to the sixth aspect, wherein the parking apparatus sends the wireless positioning data to the server; if the server receives a parking notification of the vehicle but does not receive the wireless positioning data of the vehicle from the parking apparatus, then the server sends the prompt message to the terminal of the user.

According to the eighth aspect, there is provided the method according to the seventh aspect, wherein the parking notification is sent to the server by a/the terminal of the vehicle's user, or the parking notification is sent to the server by the vehicle when the vehicle is set to a parked state.

According to the ninth aspect of the present invention, there is provided a vehicle, comprising a parking state monitoring unit and a first wireless communication unit, wherein the parking state monitoring unit is configured to monitor whether the vehicle is set to a parked state; and the first wireless communication unit is configured to emit wireless positioning data to the surrounding to locate the vehicle when the vehicle is set to a parked state.

According to the tenth aspect, there is provided the vehicle according to the ninth aspect, further comprising a second wireless communication unit, wherein the second wireless communication unit is configured to send a parking notification to a server when the vehicle is set to a parked state.

According to the eleventh aspect, there is provided the vehicle according to the ninth aspect or the tenth aspect, further comprising a first parking prompt unit, wherein the first wireless communication unit is further configured to receive a prompt message about vehicle parking from a parking apparatus, or the second wireless communication unit is further configured to receive the prompt message about vehicle parking from the server; and the first parking prompt unit is configured to provide a user with a tip about vehicle parking according to the prompt message, the user including a user of the vehicle and/or a parking administrator.

According to the twelfth aspect, there is provided the vehicle according to the eleventh aspect, wherein the prompt message is provided when the vehicle is not parked within a parking area.

According to the thirteenth aspect, there is provided the vehicle according to the eleventh aspect or the twelfth aspect, wherein the first parking prompt unit is a sound prompt unit.

According to the fourteenth aspect, there is provided the vehicle according to any one of the ninth aspect to the thirteenth aspect, wherein the first wireless communication unit is a Bluetooth communication unit or a WIFI communication unit, and the second wireless communication unit is a 2G/3G/4G wireless communication unit.

According to the fifteenth aspect, there is provided the vehicle according to any one of the ninth aspect to the fourteenth aspect, wherein the vehicle is set to a parked state when a lock of the vehicle is set to a locked state.

According to the sixteenth aspect of the present invention, there is provided a parking apparatus, comprising a third wireless communication unit and a fourth communication unit, wherein the third wireless communication unit is configured to receive wireless positioning data sent by a parked vehicle; and the fourth communication unit is configured to send the wireless positioning data to a server.

According to the seventeenth aspect, there is provided the parking apparatus according to the sixteenth aspect, wherein the fourth communication unit is further configured to receive a prompt message about vehicle parking from the server.

According to the eighteenth aspect, there is provided the parking apparatus according to the seventeenth aspect, further comprising a second parking prompt unit, wherein the second parking prompt unit is configured to provide a user with a tip about vehicle parking according to the prompt message, the user including a user of the vehicle and/or a parking administrator.

According to the nineteenth aspect, there is provided the parking apparatus according to the seventeenth aspect or the eighteenth aspect, wherein the third wireless communication unit is further configured to send the prompt message about vehicle parking to the vehicle.

According to the twentieth aspect, there is provided the parking apparatus according to any one of the seventeenth aspect to the nineteenth aspect, wherein the prompt message is provided when the vehicle is not parked within a parking area.

According to the twenty first aspect of the present invention, there is provided a parking apparatus, comprising a third wireless communication unit, a positioning unit and a second parking prompt unit, wherein the third wireless communication unit is configured to receive wireless positioning data sent by a parked vehicle; the positioning unit is configured to obtain the location of the vehicle relative to the parking apparatus according to the wireless positioning data; and the second parking prompt unit is configured to determine whether the vehicle is parked within a parking area according to the location of the vehicle relative to the parking apparatus, and if the vehicle is not parked within the parking area, then prompt a user that the vehicle is not parked within the parking area or send the vehicle a prompt message that the vehicle is not parked within the parking area through the third wireless communication unit, the user including a user of the vehicle and/or a parking administrator.

According to the twentieth second aspect, there is provided the parking apparatus according to any one of the sixteenth aspect to the twenty first aspect, wherein the third wireless communication unit is a Bluetooth communication unit or a WIFI communication unit.

According to the twenty third aspect of the present invention, there is provided a server, comprising a fifth communication unit, a positioning unit and a third parking prompt unit, wherein the fifth communication unit is configured to receive wireless positioning data of a parked vehicle from a parking apparatus; the positioning unit is configured to obtain the location of the vehicle relative to the parking apparatus according to the wireless positioning data; and the third parking prompt unit is configured to determine whether the vehicle is parked within a parking area according to the location of the vehicle relative to the parking apparatus, generate a prompt message about vehicle parking based on the determination result, and send the prompt message to the parking apparatus through the fifth communication unit.

According to the twenty forth aspect, there is provided the server according to the twenty third aspect or the eighteenth aspect, further comprising a sixth wireless communication unit, wherein the sixth wireless communication unit is configured to receive a parking notification of the vehicle; and the third parking prompt unit is further configured to, if the server receives the parking notification of the vehicle but does not receive the wireless positioning data of the vehicle from the parking apparatus, then the server sends the prompt message about vehicle parking to a terminal of a user through the sixth wireless communication unit, the user including a user of the vehicle and/or a parking administrator.

According to the twenty fifth aspect of the present invention, there is provided a server, comprising a fifth communication unit, a positioning unit, a third parking prompt unit and a sixth wireless communication unit, wherein the fifth communication unit is configured to receive wireless positioning data of a parked vehicle from a parking apparatus; the positioning unit is configured to obtain the location of the vehicle relative to the parking apparatus according to the wireless positioning data; and the third parking prompt unit is configured to determine whether the vehicle is parked within a parking area according to the location of the vehicle relative to the parking apparatus, generate a prompt message about vehicle parking based on the determination result, and send the prompt message to a terminal of a user through the sixth wireless communication unit, the user including a user of the vehicle and/or a parking administrator.

According to the twenty sixth aspect, there is provided the server according to the twenty fifth aspect, wherein the sixth wireless communication unit is configured to receive a parking notification of the vehicle; and the third parking prompt unit is further configured to, if the server receives the parking notification of the vehicle but does not receive the wireless positioning data of the vehicle from the parking apparatus, then the server sends the prompt message about vehicle parking to the terminal of the user through the sixth wireless communication unit.

According to the twenty seventh aspect, there is provided the server according to the twenty forth aspect or the twenty sixth aspect, wherein the parking notification of the vehicle is sent to the server by a/the terminal of the vehicle's user, or the parking notification is sent to the server by the vehicle when the vehicle is set to a parked state.

According to the twenty eighth aspect, there is provided the server according to any one of the twenty third aspect to the twenty sixth aspect, wherein the prompt message is provided when the vehicle is not parked within the parking area.

According to the twenty ninth aspect, there is provided a parking management system for a public vehicle, comprising a server and a parking apparatus provided in a parking area, wherein the parking apparatus is configured to receive wireless positioning data sent by a parked vehicle and send the wireless positioning data to the server; and the server is configured to obtain the location of the vehicle relative to the parking apparatus according to the wireless positioning data, determine whether the vehicle is parked within the parking area according to the location of the vehicle relative to the parking apparatus, and send a prompt message about vehicle parking to a terminal of a user or the parking apparatus based on the determination result, the user including a user of the vehicle and/or a parking administrator.

According to the thirtieth aspect, there is provided the parking management system according to the twenty ninth aspect, wherein the prompt message is provided when the vehicle is not parked within the parking area.

According to the thirtieth first aspect, there is provided the parking management system according to the twenty ninth aspect or the thirtieth aspect, wherein the server is further configured to receive a parking notification of the vehicle, and if the server receives the parking notification of the vehicle but does not receive the wireless positioning data of the vehicle from the parking apparatus, then the server sends the prompt message about vehicle parking to the terminal of the user.

According to the thirtieth second aspect, there is provided a server, comprising a memory and a processor, wherein the memory stores instructions to control the processor to operate to implement the parking management method according to any one of the first aspect to the eighth aspect.

Those skilled in the art shall well know that, as electronic and information technologies such as large scale integrated circuit technologies develop and the trend that software are realized by hardware advances, it becomes difficult to distinguish software and hardware of computer systems, since any operation or execution of any instruction can be realized by software or hardware. Whether to realize a function of a machine using a software or hardware solution may depend on non-technical factors such as prices, speeds, reliability, storage capacity, change period etc. Therefore, a more direct and clear description manner of a technical solution to a person skilled in the fields of electronic and information technologies may be descriptions of the operations of the solution. When knowing the operations to be performed, those skilled in the art may directly design desired products based on considerations of the non-technical factors.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. It is well-known to a person skilled in the art that the implementations of using hardware, using software or using the combination of software and hardware can be equivalent with each other.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein. The scope of the present invention is defined by the attached claims.

## Claims

1. A parking management method for a public vehicle, **characterized by** following method steps:
receiving wireless positioning data sent by a parked vehicle via a parking apparatus provided on the site of a parking area;
obtaining the location of the vehicle relative to the parking apparatus according to the wireless positioning data;
determining whether the vehicle is parked within the parking area according to the location of the vehicle relative to the parking apparatus; and
providing a user with the determination result as a prompt message, the user including a user of the vehicle and/or a parking administrator.

2. The method according to claim 1, **characterized in that** the prompt message is provided when the vehicle is not parked within the parking area.

3. The method according to claim 1 or 2, **characterized in that** the parking area is provided with at least three parking apparatuses and the three parking apparatuses are not collinear.

4. The method according to any one of claims 1 to 3, **characterized in that** the parking apparatus obtains the location of the vehicle relative to the parking apparatus according to the wireless positioning data; or
the parking apparatus uploads the wireless positioning data to a server, and the server obtains the location of the vehicle relative to the parking apparatus according to the wireless positioning data.

5. The method according to any one of claims 1 to 4, **characterized in that** the parking apparatus provides the user with the prompt message, or a terminal of the user provides the user with the prompt message, or the vehicle provides the user with the prompt message.

6. The method according to claim 5, **characterized in that** the parking apparatus or the terminal of the user receives the prompt message from the server, or the vehicle receives the prompt message from the parking apparatus or the server.

7. The method according to any one of claims 1 to 6, **characterized in that** the parking apparatus sends the wireless positioning data to the server;
if the server receives a parking notification of the vehicle but does not receive the wireless positioning data of the vehicle from the parking apparatus, then the server sends the prompt message to the terminal of the user.

8. The method according to claim 7, **characterized in that** the parking notification is sent to the server by a/the terminal of the vehicle's user, or the parking notification is sent to the server by the vehicle when the vehicle is set to a parked state.

9. A server, comprising a memory and a processor, **characterized in that** the memory stores instructions to control the processor to operate to implement the parking management method according to any one of claims 1 to 8.

10. A vehicle, **characterized in that** comprising a parking state monitoring unit and a first wireless communication unit, wherein
the parking state monitoring unit is configured to monitor whether the vehicle is set to a parked state; and
the first wireless communication unit is configured to emit wireless positioning data to the surrounding to locate the vehicle when the vehicle is set to a parked state.

11. The vehicle according to claim 10, **characterized in that** further comprising a second wireless communication unit, wherein
the second wireless communication unit is configured to send a parking notification to a server when the vehicle is set to a parked state.

12. The vehicle according to claim 11, **characterized in that** further comprising a first parking prompt unit, wherein
the first wireless communication unit is further configured to receive a prompt message about vehicle parking from a parking apparatus, or the second wireless communication unit is further configured to receive the prompt message about vehicle parking from the server; and
the first parking prompt unit is configured to provide a user with a tip about vehicle parking according to the prompt message, the user including a user of the vehicle and/or a parking administrator.

13. The vehicle according to any one of claims 10 to 12, **characterized in that** the vehicle is set to a parked state when a lock of the vehicle is set to a locked state.

14. A parking apparatus, **characterized in that** comprising a third wireless communication unit and a fourth communication unit, wherein
the third wireless communication unit is configured to receive wireless positioning data sent by a parked vehicle; and
the fourth communication unit is configured to send the wireless positioning data to a server.

15. A parking apparatus, **characterized in that** comprising a third wireless communication unit, a positioning unit and a second parking prompt unit, wherein
the third wireless communication unit is configured to receive wireless positioning data sent by a parked vehicle;
the positioning unit is configured to obtain the location of the vehicle relative to the parking apparatus according to the wireless positioning data; and
the second parking prompt unit is configured to determine whether the vehicle is parked within a parking area according to the location of the vehicle relative to the parking apparatus, and if the vehicle is not parked within the parking area, then prompt a user that the vehicle is not parked within the parking area or send the vehicle a prompt message that the vehicle is not parked within the parking area through the third wireless communication unit, the user including a user of the vehicle and/or a parking administrator.
